(19) Europäisches Patentamt European Patent Office Office européen des brevets

(11) EP 1 833 767 B1

(12) EUROPEAN PATENT SPECIFICATION

(45) Date of publication and mention
of the grant of the patent:
**14.08.2019 Bulletin 2019/33**

(51) Int Cl.:
*C03B 19/10* (2006.01)    *C03C 11/00* (2006.01)

(21) Application number: **05797410.7**

(86) International application number:
**PCT/US2005/032887**

(22) Date of filing: **15.09.2005**

(87) International publication number:
**WO 2006/062566 (15.06.2006 Gazette 2006/24)**

(54) **METHOD OF MAKING GLASS MICROBUBBLES AND RAW PRODUCT**

VERFAHREN ZUR HERSTELLUNG VON GLASMIKROBLÄSCHEN UND ROHPRODUKT

PROCEDE DE REALISATION DE MICROBULLES DE VERRE ET D'UN PRODUIT BRUT

(84) Designated Contracting States:
**AT BE BG CH CY CZ DE DK EE ES FI FR GB GR
HU IE IS IT LI LT LU LV MC NL PL PT RO SE SI
SK TR**

(30) Priority: **03.12.2004 US 4385**

(43) Date of publication of application:
**19.09.2007 Bulletin 2007/38**

(73) Proprietor: **3M Innovative Properties Company
St. Paul, MN 55133-3427 (US)**

(72) Inventors:
• **MARSHALL, Harry, J.
Saint Paul, Minnesota 55133-3427 (US)**
• **SHINBACH, Madeline, P.
Saint Paul, Minnesota 55133-3427 (US)**

(74) Representative: **Vossius & Partner
Patentanwälte Rechtsanwälte mbB
Siebertstrasse 3
81675 München (DE)**

(56) References cited:
EP-A- 0 393 625    EP-A- 1 172 341
FR-A- 2 671 072    US-A- 3 365 315
US-A- 3 961 978    US-A- 4 017 290
US-A- 4 391 646    US-A- 4 767 726
US-A- 5 217 928    US-A- 5 217 928
US-A- 5 500 287

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

BACKGROUND

Hollow glass beads having a mean diameter of less than about 500 micrometers, also commonly known as "hollow glass microspheres" or "glass microbubbles", are widely used in industry, for example, as additives to polymeric compounds where they may serve as modifiers, enhancers, rigidifiers, and/or fillers. Generally, it is desirable that the glass microbubbles be strong to avoid being crushed or broken during further processing of the polymeric compound, such as by high pressure spraying, kneading, extrusion or injection molding.

Glass microbubbles are typically made by heating milled frit, commonly referred to as "feed", that contains a blowing agent such as, for example, sulfur or a compound of oxygen and sulfur. The resultant product (that is, "raw product") obtained from the heating step typically contains a mixture of glass microbubbles (including broken glass microbubbles) and solid glass beads, the solid glass beads generally resulting from milled frit particles that failed to form glass microbubbles for whatever reason.

The milled frit is typically obtained as a relatively broad distribution of particle sizes. During heating, the larger particles tend to form glass microbubbles that are more fragile than the mean, while the smaller particles tend to increase the density of the hollow glass bead distribution. In the case that larger glass microbubbles become broken, the average density of the glass bead distribution containing the broken bead portions also generally increases.

EP 1 172 341 A1 discloses hollow glass microspheres and a process for producing the same. FR 2 671 072 A discloses hollow microspheres made of a silica-soda-lime glass. US 5,217,928 discloses hollow glass spheres made by heating solid glass particles.

SUMMARY

The present invention provides a method of forming glass microbubbles comprising heating feed under conditions sufficient to convert at least a portion of the feed into raw product comprising glass microbubbles, wherein the feed has a mean particle size of from at least 3 to 100 micrometers and a size distribution with a span of less than 0,8, and the feed is provided by a method comprising:

milling frit to provide milled frit; and
classifying the milled frit.

Disclosed herein is a raw product comprising glass microbubbles, wherein on a weight basis a majority of the raw product comprises glass microbubbles, and wherein the plurality of raw product has a size distribution with a span of less than 0.80.

For any given heating process, it is generally the case that the density of the resultant hollow glass bead distribution correlates with the throughput rate at which the feed is converted into glass microbubbles. Thus, in order to produce low density glass microbubbles it is generally necessary to use relatively lower throughput rates using a given process and apparatus. By using feed having a narrower particle size distribution than those currently used by the glass microbubble industry, the present invention generally achieves at least one of the following: (1) a low density distribution of glass microbubbles having an average crush strength comparable to higher density distributions of glass microbubbles; or (2) an increased throughput rate while obtaining glass microbubbles of average density and/or crush strengths typically associated with glass microbubbles produced at lower throughput rates using the same heating apparatus and conditions.

DETAILED DESCRIPTION

Frit may be prepared, for example, by crushing and/or milling a suitable glassy material, typically a relatively low melting silicate glass containing a suitable amount of blowing agent. Silicate glass compositions suitable for forming frit are described, for example, in U.S. Pat. Nos. 2,978,340 (Veatch et al.); 3,030,215 (Veatch et al.); 3,129,086 (Veatch et al.); and 3,230,064 (Veatch et al.); 3,365,315 (Beck et al.); and 4,391,646 (Howell).

Although the frit and/or the feed may have any composition that is capable of forming a glass, typically, on a total weight basis, the frit comprises from 50 to 90 percent of $SiO_2$, from 2 to 20 percent of alkali metal oxide, from 1 to 30 percent of $B_2O_3$, from 0.005-0.5 percent of sulfur (for example, as elemental sulfur, sulfate or sulfite), from 0 to 25 percent divalent metal oxides (for example, CaO, MgO, BaO, SrO, ZnO, or PbO), from 0 to 10 percent of tetravalent metal oxides other than $SiO_2$ (for example, $TiO_2$, $MnO_2$, or $ZrO_2$), from 0 to 20 percent of trivalent metal oxides (for example, $Al_2O_3$, $Fe_2O_3$, or $Sb_2O_3$), from 0 to 10 percent of oxides of pentavalent atoms (for example, $P_2O_5$ or $V_2O_5$), and from 0 to 5 percent fluorine (as fluoride) which may act as a fluxing agent to facilitate melting of the glass composition. Additional ingredients are useful in frit compositions and can be included in the frit, for example, to contribute particular properties or characteristics (for example, hardness or color) to the resultant glass microbubbles.

In the above-mentioned frit compositions, sulfur (presumably combined with oxygen) serves as a blowing agent that, upon heating, causes expansion of molten frit particles to form glass microbubbles. By controlling the amount of sulfur in the feed, the amount and length of heating to which the feed is exposed, the mean particle size, and the rate at which particles are fed through a flame the amount of expansion of the feed particles can typically be controlled to provide glass microbubbles of a selected density. Although the frit generally includes sulfur within a range of 0.005 to 0.7 weight percent, more typically, the sulfur content of the frit is in a range of from 0.01 to 0.64 percent by weight, or even in a range of from 0.05 to 0.5 percent by weight.

The frit is milled and classified, to produce feed of suitable particle size for forming glass microbubbles of the desired size. Methods that are suitable for milling the frit include, for example, milling using a bead or ball mill, attritor mill, roll mill, disc mill, jet mill, or combination thereof. For example, to prepare feed of suitable particle size for forming glass microbubbles, the frit may be coarsely milled (for example, crushed) using a disc mill, and subsequently finely milled using a jet mill.

Jet mills are generally of three types: spiral jet mills, fluidized-bed jet mills, and opposed jet mills, although other types may also be used.

Spiral jet mills include, for example, those available under the trade designations "MICRONIZER JET MILL" from Sturtevant, Inc., Hanover, Massachusetts; "MICRON-MASTER JET PULVERIZER" from The Jet Pulverizer Co., Moorestown, New Jersey; and "MICRO-JET" from Fluid Energy Processing and Equipment Co., Plumsteadville, Pennsylvania. In a spiral jet mill a flat cylindrical grinding chamber is surrounded by a nozzle ring. The material to be ground is introduced as particles inside the nozzle ring by an injector. The jets of compressed fluid expand through the nozzles and accelerate the particles, causing size reduction by mutual impact.

Fluidized-bed jet mills are available, for example, under the trade designations "CGS FLUIDIZED BED JET MILL" from Netzsch Inc., Exton, Pennsylvania; and "ROTO-JET" from Fluid Energy Processing and Equipment Co. The lower section of this type of machines is the grinding zone. A ring of grinding nozzles within the grinding zone is focused toward a central point, and the grinding fluid accelerates particles of the material being milled. Size reduction takes place within the fluidized bed of material, and this technique can greatly improve energy efficiency.

Opposed jet mills are similar to fluidized-bed jet mills, except at least two opposed nozzles accelerate particles, causing them to collide at a central point. Opposed jet mills may be commercially obtained, for example, from CCE Technologies, Cottage Grove, Minnesota.

There are many ways to describe the width of a particle size distribution. In one method, the width of a particle size distribution can be expressed by the following formula:

$$\frac{90P - 10P}{50P} = \mathrm{GQ} = \mathrm{span}$$

wherein 90P is the size for which 90 percent of the particles in the distribution are smaller (referred to as the 90th percentile size); 10$P$ is the size for which only 10 percent of the particles in the distribution are smaller (referred to as the 10th percentile size); 50P is the size for which 50 percent of the particles in the distribution are smaller (referred to as the 50th percentile size); and GQ stands for the gradation quotient. The gradation quotient is also commonly known in the art by the term "span".

Another common method, particularly useful for Gaussian particle size distributions, uses the mean and standard deviation of the particle sizes to describe the distribution.

According to the present invention, the milled frit is classified to yield a distribution of having a span of less than 0.8, which is then used as feed for forming glass microbubbles. For example, the feed may have a span of less than 0.75; the span may also be at least 0.7. In order to form glass microbubbles on heating, the feed has a mean particle size of from at least 3 to 100 micrometers, typically from at least 3 to 50 micrometers, and more typically from at least 5 to 25 micrometers.

By utilizing narrow feed distributions, the present invention provides an additional degree of control that may be used in the production of glass microbubbles as compared to current methods for forming glass microbubbles known in the art. Typically, the main process variables in the formation of glass microbubbles are the equipment, sulfur content, and the feed rate, and median feed size. Controlling the feed size distribution according to the present invention advantageously provides an additional process variable that may be varied to achieve a desired result.

Classification is performed such that at least one fraction, typically the coarsest classified portion, of the feed has a span of less than 0.8. This fraction is therefore isolated and used as the feed for the manufacture of the glass microbubbles. Remaining finer and/or coarser fraction(s) may be, for example, used to make glass microbubbles having physical properties comparable to existing glass microbubbles or reprocessed into frit.

Typically, as obtained from the above-mentioned mills each technique produces feed having a distribution of particle sizes. Typically, feed obtained from milling will not have a span of less than 0.8, and in such cases additional classification according to the present invention is desirable.

Suitable apparatus for classifying the feed include, for example, vibrating screens (including sieves), air classifiers, and wet classifiers. Other methods of classifying the feed may also be used.

Suitable screens include, for example, sieves having a designation of from 35 mesh through at least 400 mesh according to ASTM Designation: E11-04 entitled "Standard Specification for Wire Cloth and Sieves for Testing Purposes". Such sieves may be obtained from commercial suppliers such as, for example, Newark Wire Cloth Company, Newark, New Jersey.

Suitable air classifiers include, for example, gravitational classifiers, inertial classifiers, and centrifugal classifiers. Air classifiers are readily available from commercial sources, for example, as available from Hosokawa Micron Powder Systems under the trade designations "MICRON SEPARATOR", "ALPINE MODEL 100 MZR", "ALPINE TURBOPLEX ATP", "ALPINE STRATOPLEX ASP", or "ALPINE VENTOPLEX"; or from Sepor, Inc., Wilmington, California under the trade designation "GAYCO CENTRIFUGAL SEPARATOR".

Once the feed has the desired span, it is fed into a heat source (for example, a gas/air flame, approximately stoichiometric) and then cooled. Upon exposure to the heat source the feed typically softens and the blowing agent causes at least a portion of the softened feed to expand and, after cooling, form a raw product that comprises glass microbubbles, optionally in combination with broken microbubble glass fragments and/or solid glass beads that did not expand during heating. Generally, it is possible to adjust process conditions such that at least a majority by weight of the raw product comprises glass microbubbles. More typically, at least 60, 70, 80, or even 90 percent by weight of the raw product comprises glass microbubbles. If desired, at least a portion of the glass microbubbles may be isolated from the raw product, for example, by using flotation techniques as described in U.S. Pat. No. 4,391,646 (Howell).

Glass microbubbles may be prepared on apparatus such as those described, for example, in U.S. Pat. Nos. 3,230,064 (Veatch et al.) or 3,129,086 (Veatch et al.). Further details concerning heating conditions may be found for example in U.S. Pat. Nos. 3,365,315 (Beck et al.) and 4,767,726 (Marshall).

The raw product typically has a mean particle size in a range of from 5 to 250 micrometers, more typically 30 to 150 micrometers, more typically 30 to 110 micrometers. In some embodiments, the raw product may have a mean particle size of at least 70 micrometers. The raw product has a span of less than 0.80, or in some embodiments, less than 0.75, 0.70, 0.65, or even less than 0.60.

In one embodiment, the glass microbubbles may have a weight ratio of alkaline earth metal oxide to alkali metal oxide weight ratio in a range of 1.2:1 to 3.0:1, and wherein at least 97 percent by weight of the combined weight of the alkaline earth metal oxide and alkali metal oxide comprises, on a weight basis, of 70 to 80 percent $SiO_2$, 8 to 15 percent CaO, 3 to 8 percent $Na_2O$, and 2 to 6 percent $B_2O_3$.

Glass microbubbles prepared according to the method of the present invention may be included in polymeric materials and may optionally be mixed with solid glass beads. Examples of suitable polymeric materials include thermoset, thermoplastic, and elastomeric polymeric materials.

Objects and advantages of this invention are further illustrated by the following nonlimiting examples, but the particular materials and amounts thereof recited in these examples, as well as other conditions and, details, should not be construed to unduly limit this invention.

EXAMPLES

Unless otherwise noted, all parts, percentages, ratios, etc. in the examples and the rest of the specification are by weight, and all reagents used in the examples were obtained, or are available, from general chemical suppliers such as, for example, Sigma-Aldrich Company, Saint Louis, Missouri, or may be synthesized by conventional methods.

In the following examples:

"borax" refers to anhydrous borax; $Na_2O : 2B_2O_3$, 90 percent smaller than 590 micrometers, obtained from US Borax, Boron, California;

"$CaCO_3$" refers to calcium carbonate, 97 percent smaller than 44 micrometers, obtained from Imerys, Sylacauga, Alabama;

"$Li_2CO_3$" refers to lithium carbonate; finer than 420 micrometers obtained from Lithium Corp. of America, Gastonia, North Carolina;

"$SiO_2$" refers to silica flour, obtained from US Silica, Berkeley Springs, West Virginia;

"$Na_2CO_3$" refers to soda ash, obtained from FMC Corp., Greenvine, Wyoming;

"Na$_2$SO$_4$" refers to sodium sulfate, 60 percent smaller than 74 micrometers, obtained from Searles Valley Mineral, Trona, California; and

"Na$_4$P$_2$O$_7$" refers to tetrasodium pyrophosphate, 90 percent smaller than 840 micrometers, obtained from Astaris, St. Louis, Missouri.

TEST METHODS

Average Particle Density Determination

A fully automated gas displacement pycnometer obtained under the trade designation "ACCUPYC 1330 PYCNOMETER" from Micromeritics, Norcross, Georgia, was used to determine the density of the composite material and glass residual according to ASTM D-2840-69, "Average True Particle Density of Hollow Microspheres".

Particle Size Determination

Particle size distribution was determined using a particle size analyzer available under the trade designation "COULTER COUNTER LS-130" from Beckman Coulter, Fullerton, California.

Strength Test

The strength of the glass microbubbles is measured using ASTM D3102 -72; "Hydrostatic Collapse Strength of Hollow Glass Microspheres" with the exception that the sample size of glass microbubbles is 10 mL, the glass microbubbles are dispersed in glycerol (20.6 g) and data reduction was automated using computer software. The value reported is the hydrostatic pressure at which 10 percent by volume of the raw product collapses.

PREPARATION OF FRIT

Frit GFC-1

Frit was prepared by combining the following components: SiO$_2$ (600.0 g), Na$_2$O. 2B$_2$O$_3$ (130.8 g), CaCO$_3$ (180.0 g), Na$_2$CO$_3$ (18.7 g), Na$_2$SO$_4$ (20.0 g), Na$_4$P$_2$O$_7$ (6.5 g) and Li$_2$CO$_3$ (10.7 g). Mixing was carried out by tumbling for 3 minutes in an 8.7-liter jar mill with 6000 grams of alumina grinding cylinders (both available from VWR Scientific, West Chester, Pennsylvania). The batches were melted for 3 hours in fused silica refractory crucible (N size; available from DFC Ceramics, Canon City, Colorado) at a temperature of about 1290 °C (2350° F) in a quick recovery electrically heated furnace (available from Harper Electric, Terryville, Connecticut). The resulting molten glass was quenched in water and dried resulting in Frit GFC-1.

Frits GFC-2 through GFC-10 and GF-1 through GF-4

Frits GFC-2 to GFC-10 and GF-1 through GF-4 were prepared according to the procedure described for frit GFC-1, except that the glass composition was varied as reported in Table 1 (below).

TABLE 1

| Frit | Amount of Component, grams | | | | | | |
|------|------|------|------|------|------|------|------|
|  | SiO$_2$ | Na$_2$O · 2B$_2$O$_3$ | Na$_2$CO$_3$ | CaCO$_3$ | Na$_2$SO$_4$ | Na$_4$P$_2$O$_7$ | Li$_2$CO$_3$ |
| GFC-2 | 600.0 | 130.8 | 18.7 | 180.0 | 20.0 | 6.5 | 10.7 |
| GFC-3 | 600.0 | 130.8 | 18.7 | 180.0 | 20.0 | 6.5 | 10.7 |
| GFC-4 | 600.0 | 123.9 | 58.5 | 172.9 | 5.0 | 0 | 0 |
| GFC-5 | 600.0 | 123.9 | 58.5 | 172.9 | 5.0 | 0 | 0 |
| GFC-6 | 600.0 | 123.9 | 58.5 | 172.9 | 5.0 | 0 | 0 |
| GFC-7 | 600.0 | 130.8 | 18.7 | 180.0 | 20.0 | 6.5 | 10.7 |
| GFC-8 | 600.0 | 130.8 | 18.7 | 180.0 | 20.0 | 6.5 | 10.7 |

(continued)

| Frit | Amount of Component, grams | | | | | | |
|------|------|------|------|------|------|------|------|
| | $SiO_2$ | $Na_2O \cdot 2B_2O_3$ | $Na_2CO_3$ | $CaCO_3$ | $Na_2SO_4$ | $Na_4P_2O_7$ | $Li_2CO_3$ |
| GFC-9 | 600.0 | 123.9 | 58.5 | 172.9 | 5.0 | 0 | 0 |
| GFC-10 | 600.0 | 123.9 | 58.5 | 172.9 | 5.0 | 0 | 0 |
| GF-1 | 600.0 | 130.8 | 18.7 | 180.0 | 20.0 | 6.5 | 10.7 |
| GF-2 | 600.0 | 123.9 | 58.5 | 172.9 | 5.0 | 0 | 0 |
| GF-3 | 600.0 | 130.8 | 18.7 | 180.0 | 20.0 | 6.5 | 10.7 |
| GF-4 | 600.0 | 123.9 | 59.6 | 172.9 | 3.5 | 0 | 0 |

PREPARATION OF FEED

Feed FSC-1 (not according to the invention)

Frit GFC-1, prepared above, was partially crushed using a disc mill (available under the trade designation "PULVERIZING DISC MILL" from Bico, Inc., Burbank, California) equipped with ceramic discs and having a 0.030-inch (0.762-mm) outer gap. The resultant milled frit (approx 700 g increments) was then further milled in a fluid bed jet mill (available under the trade designation "ALPINE MODEL 100 APG" from Hosokawa Micron Powder Systems, Summit, New Jersey), yielding Feed FSC-1, median size = 22.58 micrometers, span = 1.13.

Feeds FSC-3, FSC-4, FSC-6, FSC-7, and FSC-9 (not according to the invention)

The procedure for making feedstock FSC-1 was followed except using frits GFC-3, GFC-4, GFC-6, GFC-7, and GFC-9 in place of GFC-1 resulting in feedstocks FSC-3, FSC-4, FSC-6, FSC-7, and FSC-9, respectively, with median size and span values as reported in Table 2.

Feeds FSC-2, FSC-5, FSC-8, FS-1, FS-2 (not according to the invention), FS-3 and FS-4

The procedure of feed FSC-1 was followed to generate feeds FSC-2, FSC-5, FSC-8 and FS-1 through FS-4 from frits GFC-2, GFC-5, GFC-8 and GF-1 through GF-4, respectively, except that after milling, each milled frit was classified into two portions using a centrifugal air classifier (available under the trade designation "ALPINE CLASSIFIER MODEL 100 MZR" from Hosokawa Micron Powder Systems). Typically, a coarse fraction and a fine fraction were isolated. Feeds FS-1 through FS-4 correspond to the coarse fraction and Feedstocks FSC-2, FSC-5, and FSC-8 correspond to the fine fraction. After classification, FS-4 was screened through a 230 mesh (U.S. mesh size) sieve.

PREPARATION OF GLASS MICROBUBBLES

Glass Microbubbles RPC-1

Feed FSC-1, prepared above, was passed through a natural gas/air flame of approximately stoichiometric proportions with a combustion air flow calculated to be about 25.7 liters/minute at standard temperature and pressure and an output rate of approximately 2.75 pounds/hr (1.25 kg/hr). The air:gas ratio was adjusted to yield the lowest total product density. The flame-formed product was cooled by mixing with ambient temperature air and then separated from the resulting gas stream with a cyclone device. The resulting glass microbubbles (glass microbubbles RPC-1) had a median size of 74.8 with a span of 1.72.

Glass Microbubbles RPC-2 through RPC-9 and RP-1 through RP-4

Glass microbubbles RPC-2 to RPC-9 and RP-1 through RP-4 were prepared according to the procedure used for preparing glass microbubbles RPC-1 (above) except using Feedstocks FSC-2 through FSC-9 and FS-1 through FS-4, respectively, instead of Feed FSC-1, and using the values of gas flow and output rate reported in Table 2 (below). Further, in preparing RP-4, the flame temperature was increased by enrichment with oxygen.

TABLE 2

| Feed | Feed Particle Size Distribution | | Raw Product | Gas flow, liters/min | Output rate, lbs/hr; (kg/hr) | Raw Product Density (g/mL) | Raw Product Standard Deviation | Raw Product Particle Size Distribution | | Strength, psi (MPa) |
|---|---|---|---|---|---|---|---|---|---|---|
| | Median size, micrometers | Span | | | | | | Median size, micrometers | Span | |
| FSC-1 | 22.58 | 1.72 | RPC-1 | 25.7 | 2.75 (1.25) | 0.125 | 26.10 | 74.79 | 0.93 | 190 (1.31) |
| FSC-2 | 12.35 | 1.96 | RPC-2 | 25.7 | 2.68 (1.21) | 0.157 | 17.54 | 51.61 | 0.91 | 233 (1.61) |
| FSC-3 | 35.43 | 1.81 | RPC-3 | 25.7 | 2.60 (1.18) | 0.161 | 35.2 | 95.30 | 1.01 | 124 (0.86) |
| FSC-4 | 25.51 | 1.66 | RPC-4 | 27.6 | 2.80 (1.27) | 0.501 | 16.85 | 42.86 | 1.09 | 11,500 (79.3) |
| FSC-5 | 14.92 | 1.85 | RPC-5 | 27.6 | 2.80 (1.27) | 0.557 | 12.21 | 28.17 | 1.12 | 16,638 (114.7) |
| FSC-6 | 38.18 | 1.75 | RPC-6 | 27.6 | 2.72 (1.23) | 0.594 | 23.77 | 57.05 | 1.15 | 9,653 (66.6) |
| FSC-7 | 10.06 | 1.45 | RPC-7 | 25.7 | 2.70 (1.22) | 0.205 | 14.70 | 33.85 | 1.07 | 300 (2.07) |
| FSC-8 | 7.19 | 1.52 | RPC-8 | 25.7 | 2.70 (1.22) | 0.245 | 15.93 | 24.20 | 1.56 | 339 (2.34) |
| FSC-9 | 10.64 | 1.43 | RPC-9 | 27.6 | 2.70 (1.22) | 0.620 | 10.90 | 17.84 | 1.20 | 22,377 (154.28) |
| FS-1 | 36.75 | 0.87 | RP-1 | 25.7 | 2.77 (1.26) | 0.099 | 21.20 | 88.18 | 0.62 | 170 (1.17) |
| FS-2 | 38.46 | 0.86 | RP-2 | 27.6 | 2.80 (1.27) | 0.412 | 12.21 | 54.30 | 0.58 | 9300 (64.12) |
| FS-3 * | 14.85 | 0.77 | RP-3 | 25.7 | 2.75 (1.25) | 0.158 | 9.00 | 34.93 | 0.60 | 300 (2.07) |
| FS-4 * | 74.61 | 0.72 | RP-4 | 27.6 | 1.0 (0.45) | 0.399 | 23.09 | 109.2 | 0.56 | 4436 (30.59) |
| * Examples according to the invention | | | | | | | | | | |

Various modifications and alterations of this invention may be made by those skilled in the art without departing from the scope of this invention as defined by the appended claims, and it should be understood that this invention is not to be unduly limited to the illustrative embodiments set forth herein.

## Claims

1. A method of forming glass microbubbles comprising heating feed under conditions sufficient to convert at least a portion of the feed into raw product comprising glass microbubbles, wherein the feed has a mean particle size of from at least 3 to 100 micrometers and a size distribution with a span of less than 0.80, and wherein the feed is provided by a method comprising:

   milling frit to provide milled frit; and
   classifying the milled frit.

2. A method according to claim 1, wherein the span is in a range of from at least 0.7 and less than 0.80.

3. A method according to claim 1, further comprising isolating glass microbubbles from the raw product.

## Patentansprüche

1. Verfahren zur Bildung von Glasmikrobläschen, umfassend das Erwärmen einer Beschickung unter Bedingungen, die ausreichen, um zumindest einen Teil der Beschickung in ein Glasbläschen umfassendes Rohprodukt umzuwandeln, wobei die Beschickung eine mittlere Teilchengröße von mindestens 3 bis 100 Mikrometern und eine Größenverteilung mit einer Spanne von weniger als 0,80 aufweist, und wobei die Beschickung durch ein Verfahren bereitgestellt wird, das Folgendes umfasst:

   Mahlen von Fritte zum Bereitstellen einer gemahlenen Fritte; und
   Klassifizieren der gemahlenen Fritte.

2. Verfahren nach Anspruch 1, wobei die Spanne in einem Bereich von mindestens 0,7 und weniger als 0,80 liegt.

3. Verfahren nach Anspruch 1, das ferner das Isolieren von Glasmikrobläschen aus dem Rohprodukt umfasst.

## Revendications

1. Procédé de formation de microbulles de verre comprenant le chauffage d'une charge dans des conditions suffisantes pour convertir au moins une partie de la charge en produit cru comprenant des microbulles de verre, dans lequel la charge a une taille moyenne de particules allant d'au moins 3 à 100 micromètres et une distribution granulométrique avec une étendue inférieure à 0,80, et dans lequel la charge est fournie par un procédé comprenant :

   le broyage d'une fritte pour fournir une fritte broyée ; et
   la classification de la fritte broyée.

2. Procédé selon la revendication 1, dans lequel l'étendue est dans une plage à partir d'au moins 0,7 et inférieure à 0,80.

3. Procédé selon la revendication 1, comprenant en outre l'isolement de microbulles de verre par rapport au produit cru.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 1172341 A1
- FR 2671072 A
- US 5217928 A
- US 2978340 A, Veatch
- US 3030215 A, Veatch
- US 3129086 A, Veatch
- US 3230064 A, Veatch
- US 3365315 A, Beck
- US 4391646 A, Howell
- US 4767726 A, Marshall

### Non-patent literature cited in the description

- ACCUPYC 1330 PYCNOMETER. *Micromeritics*
- Average True Particle Density of Hollow Micro-spheres. *ASTM D-2840-69*